# EUROPEAN PATENT APPLICATION

(11) **EP 1 791 295 A1**
(43) Date of publication of application: **30.05.2007**
(21) Application number: 06123272.4
(22) Date of filing: 31.10.2006
(51) Int. Cl.: H04L 12/24, H04L 12/26

(54) **Increasing bandwidth usage in a network**

(30) Priority: 25.11.2005 US 739473 P; 30.06.2006 US 478784
(71) Applicant: Jenster, Per Villendrup, Changhai (CN)
(72) Inventor: Jenster, Per Villendrup, Changhai (CN)
(74) Representative: Hellmich, Wolfgang

(57) **Abstract**

A method and system for increasing the bandwidth usage in a network is provided. The method includes monitoring the bandwidth usage. The method and system further includes offering one or more incentives to a user of an electronic device for using one or more services when the bandwidth usage is less than a threshold value. The one or more services are provided at the electronic device through the network and increase the use of the bandwidth in the network.

## Description

This invention generally relates to the field of networks. More specifically, the invention relates to optimizing bandwidth usage in a network.

Nowadays, the use of electronic devices such as mobile phones, smart phones, and personal digital assistants (PDAs) has increased tremendously. Electronic devices use various services. Examples of such services include a voice-calling service, a multimedia message service (MMS) service, an online gaming service, an online gambling service, and so forth. Data related to a service is transferred through a network. The network can transmit only a limited amount of data per unit time, referred to as the bandwidth of the network. The bandwidth is generally expressed in kilobytes per second (kbps). For example, a typical CDMA network can operate at 16 kbps to 128 kbps. In the network, the amount of data transferred at a particular instant of time is referred to as the bandwidth usage. The bandwidth usage varies throughout a day due to variation in the use of services. The bandwidth usage can be very low at times, typically during the night, due to the minimal usage of the services.

Typically, the revenue of a network provider depends on the bandwidth usage. Therefore, a low bandwidth usage translates into low revenue. Since a major component of the operational cost for the network provider is generally fixed and is not affected by the bandwidth usage, this translates into high operational costs. The high operational cost, along with the reduced revenue, can result in a reduction in the profits, as well as huge losses to the network provider.

There are various methods for increasing the bandwidth usage in a network. In one such method, the tariff for communication among electronic devices is reduced during a fixed period of time, to encourage the users of the electronic devices to increase their communication, and thereby boost the bandwidth usage. In another method, the tariff for accessing the Internet is reduced during a fixed period of time every day, to encourage the users to use the Internet.

However, these methods have one or more of the following limitations. Firstly, the bandwidth usage at a time other than the fixed time period cannot be increased, even when the bandwidth usage is very low. Secondly, the one or more methods offer a reduction in the tariff for using only some specific services such as the Internet. This does not offer the user the flexibility of choosing a service of his choice with reduced tariff. Thirdly, only reduction in the tariff is offered whereas other options, such as prizes and gift coupons, are not offered.

It is an object of the present invention to increase the bandwidth usage in a network even at a time other than the fixed period of time.

Another object of the present invention is to offer flexibility to a user of an electronic device to choose a service of his choice, with reduced tariffs.

Yet another object of the present invention is to offer various types of incentives for using services including a reduction in the tariffs.
These objects are achieved by the subject matter of the independent claims.
Preferred embodiments are the subject matter of the dependent claims.

The preferred embodiments of the invention will hereinafter be described in conjunction with the appended drawings, provided to illustrate and not to limit the invention, wherein like designations denote like elements, and in which:
FIG. 1 shows an exemplary environment, in which various embodiments of the present invention can be practiced;
FIG. 2 depicts a bandwidth management system, in accordance with an embodiment of the present invention;
FIG. 3 is a flowchart depicting a method for increasing the bandwidth usage in a network, in accordance with an embodiment of present invention;
FIG. 4 is a flowchart depicting a method for increasing the bandwidth usage in a network, in accordance with another embodiment of the present invention; and
FIG. 5 shows a bandwidth fluctuation pattern illustrating an exemplary variation in the bandwidth usage in a network in a day, in accordance with an embodiment of the present invention.

Various embodiments of the invention provide a method, a system and a computer program product for increasing the bandwidth usage in a network. Specifically, various embodiments of the invention provide a method and a system for increasing the bandwidth usage in the network by offering one or more incentives for using one or more services when the bandwidth usage is less than a threshold value.

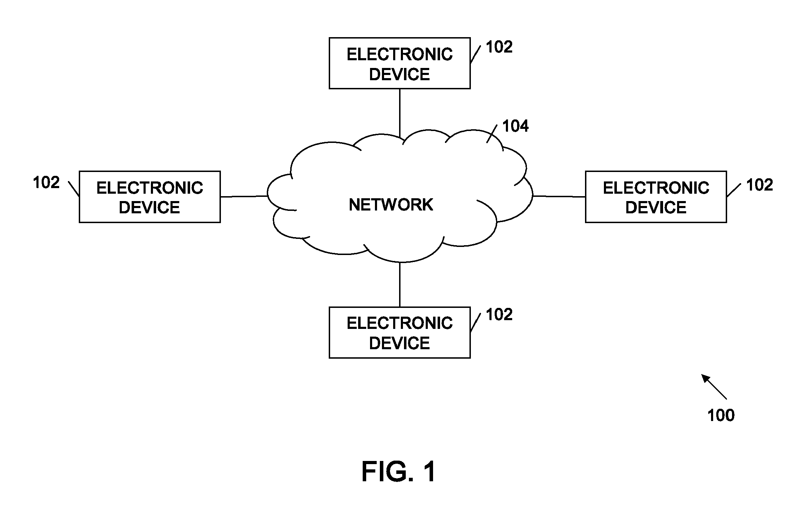

FIG. 1 shows an exemplary environment 100, in which various embodiments of the present invention can be practiced. Environment 100 includes a plurality of electronic devices 102, and a network 104. Examples of an electronic device include a mobile phone, a smart phone, a PDA, a personal computer, and a laptop. Plurality of electronic devices 102 uses various services that are provided through network 104. Examples of network 104 include a CDMA network, a GSM network, the Internet, a UMTS network, a TDMA network, and the like. It should be noted that network 104 can be a wired network or a wireless network. Network 104 can have components such as a Base Transceiver Station (BTS), Base Station Controller (BSC), and Mobile Switching Center (MSC) associated with it. A BTS communicates with several mobile phones in a network through radio signals. A BSC controls one or more BTS's. Typically, a BSC can control around 200 BTS's. The BSC allocates radio channels for communication and controls handovers from the BTS's. A MSC controls several BSC's and carries out switching functions. The services can be offered through the components of network 104. Usage of the services at the plurality of electronic devices 102 consumes the bandwidth of network 104. Examples of a service include, but are not limited to, voice calling, online gaming, online gambling, the Internet, video streaming, audio streaming, content downloading, online shopping, online dating, and online stock quotes.

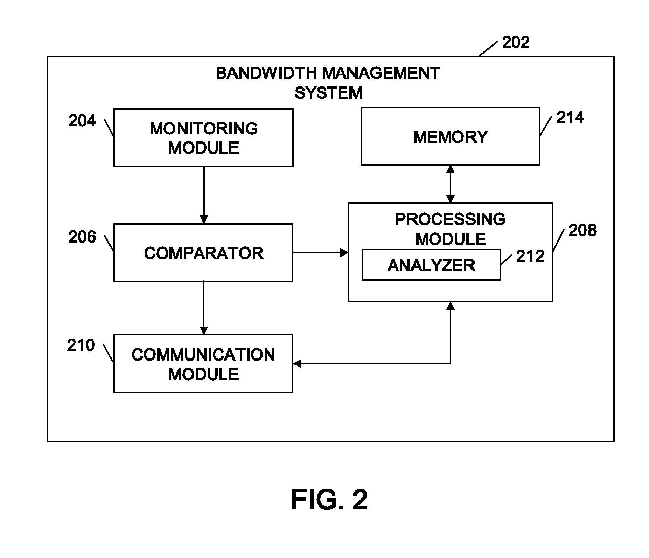

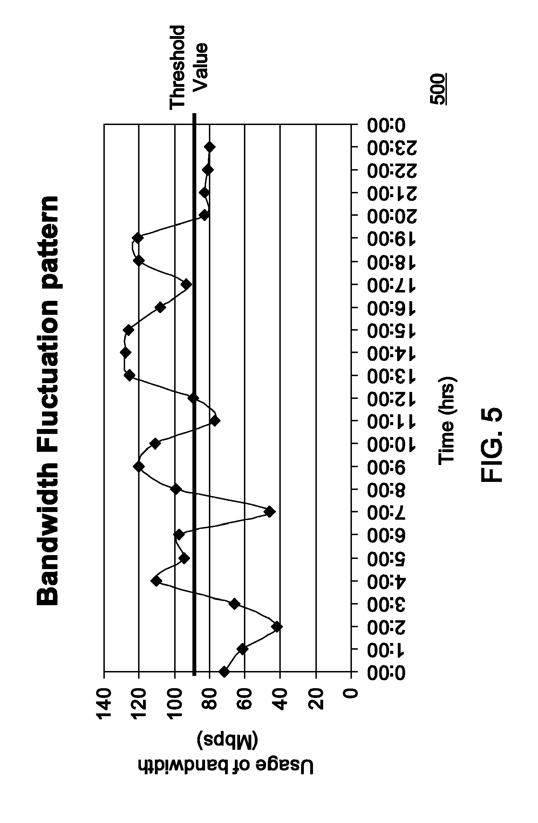

FIG. 2 depicts a bandwidth management system 202, in accordance with an embodiment of the present invention. Bandwidth management system 202 includes a monitoring module 204, a comparator 206 and a processing module 208. Monitoring module 204 monitors the bandwidth usage in network 104. Comparator 206 compares the bandwidth usage with a threshold value. The threshold value can depend on various factors such as the number of electronic devices operating in network 104, the capacity of the network hardware such as routers and switches associated with network 104, the past patterns of the bandwidth usage, and so forth. The variation in the bandwidth usage is explained in detail in conjunction with FIG. 5. After comparing the bandwidth usage with the threshold value, processing module 208 offers one or more incentives to a user of an electronic device, for using one or more services. The one or more incentives are offered based on the comparison between the bandwidth usage and the threshold value. Examples of an incentive include a reduction in the tariffs of the one or more services, free talktime for voice calling, gifts, free credit points, lucky draws, and gift coupons. For example, whenever the bandwidth usage is less than 60 percent of the capacity, a user of an electronic device may be offered free credit points for online gambling. In another example, whenever the bandwidth usage is less than 30 kbps in a CDMA network, the user of the electronic device may be offered reduced tariffs for playing online games, accessing news channels or downloading ring tones.

In an embodiment of the present invention, bandwidth management system 202 also includes a communication module 210 for communicating with an electronic device to relay the offer to the users. Communication module 210 sends a message to the electronic device and also receives a response from the electronic device. In an embodiment of the present invention, an analyzer in a processing module 208 can analyze the response from the user, to determine whether the user intends to use the one or more services.

In another embodiment of the present invention, bandwidth management system 202 further includes a memory 214 for storing data associated with the one or more services, the data associated with the one or more incentives, the preferences of users of the plurality of electronic devices 102, and so forth. Further, memory 214 can also store games, videos, music, wallpapers, ring tones and advertisements. For example, memory 214 can store the bets of the users involved in online gambling. In another example, memory 214 can store the past and present scores of users playing online games such as FIFA. In still another example, memory 214 can store the bids of users in an online auction.

It will be apparent to a person ordinarily skilled in the art that bandwidth management system 202 can be implemented in the form of hardware, software, firmware, or a combination thereof.

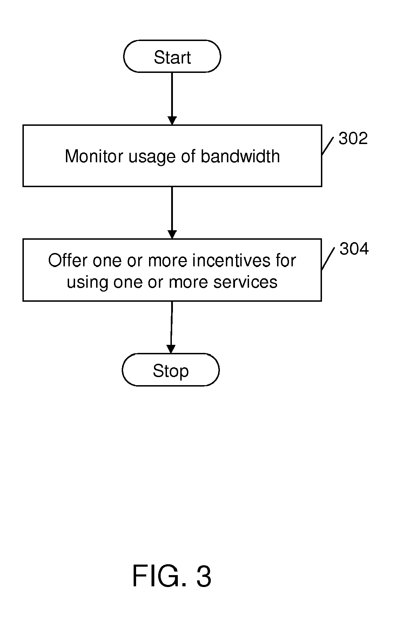

FIG. 3 is a flowchart depicting a method for increasing the bandwidth usage in network 104, in accordance with an embodiment of the present invention. At step 302, the bandwidth usage in network 104 is monitored. The bandwidth usage can be continuously monitored in real time. In an embodiment of the present invention, the bandwidth usage can be monitored after a pre-defined time period. For example, the bandwidth usage can be determined after every 10 minutes. In an embodiment of the present invention, the bandwidth usage can be monitored at a component associated with network 104 such as a BTS, a BSC, and a MSC. Thereafter, at step 304, one or more incentives are offered to a user of an electronic device, for using one or more services. The one or more incentives are offered when the bandwidth usage is less than the threshold value. Usage of the one or more services consumes the bandwidth in the network 104. Examples of a service include, but are not limited to, online gaming, online gambling, the Internet, video streaming, audio streaming, content downloading, online shopping, voice calling, online dating, and online stock quotes.

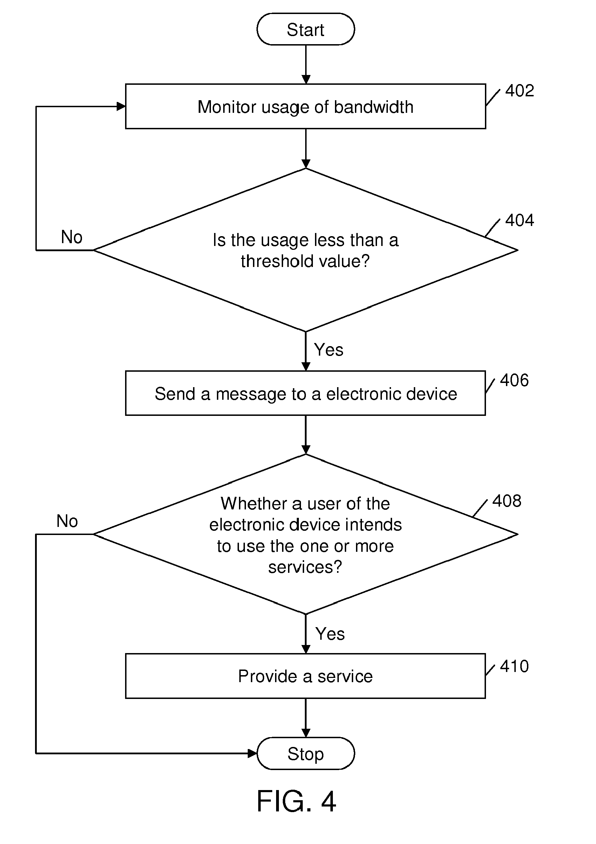

FIG. 4 is a flowchart depicting a method for increasing the bandwidth usage in network 104, in accordance with another embodiment of the present invention. It will be apparent to a person of ordinary skill in the art that the method can contain a greater or fewer number of steps than shown in FIG. 4. At step 402, the bandwidth usage in network 104 is monitored. In an embodiment of the present invention, the bandwidth usage is monitored by monitoring module 204. At step 404, it is checked if the bandwidth usage is less than the threshold value. In an embodiment of the present invention, comparator 206 checks whether the bandwidth usage is less than the threshold value. The variation in the bandwidth usage is explained in detail in conjunction with FIG. 5. When the bandwidth usage is not less than the threshold value, then the bandwidth usage is continuously monitored at step 402.

When the bandwidth usage is less than the threshold value, step 406 is followed. At step 406, a message is sent to an electronic device in network 104, to provide information about the incentives being offered for using the services. In an embodiment of the present invention, communication module 210 sends the message. Based on the response to the message, it is determined whether a user of the electronic device intends to use the services, at step 408. In an embodiment of the present invention, analyzer 212 determines whether the user of the electronic device intends to use the services, based on the response to the message. For example, a message can include the following 'Please reply to this message if you want to avail of our offer yourself'. If a user replies to the message, analyzer 212 can determine that the user intends to use the services.

When the user of the electronic device intends to use the services, a service is provided at the electronic device through network 104, at step 410. In an embodiment of the present invention, the service can be provided based on the preferences defined by the user. For example, the user can indicate that he should be provided with online gambling service whenever incentives are being offered. In another embodiment of the present invention, the user may specify the service and the corresponding incentive. For example, the user may specify that the tariff for playing an online game should be reduced whenever incentives are being offered. The amount by which the tariff will be reduced can be defined by processing module 208. In an embodiment of the present invention, processing module 208 offers the incentives through communication module 210.

In another embodiment of the present invention, a message is sent to the electronic device, to offer the incentives. The message can include the names of the services or the incentives offered for using the services. The message can also include names of the services and corresponding incentives. In an embodiment of the present invention, communication module 210 can send the message to the electronic device. Based on the response of the user of the electronic device to the message, a service can be provided at the electronic device. In an embodiment of the present invention, processing module 208 can provide the service at the electronic device by using communication module 210. The service can be offered through Wireless Application Protocol (WAP), General Packet Radio Service (GPRS), Enhanced Data rates for Global Evolution (EDGE), and so forth.

For example, a SMS can be sent to a mobile phone. This SMS may inform the user of the mobile phone about free credit points being offered for using online gambling service, and the reduced tariff for playing online games on the mobile phone. The reply to the SMS by the user may contain "online gambling". Therefore, online gambling with free credit points can be provided at the mobile phone.

When the user of the electronic device does not intends to use the services the method ends.

FIG. 5 shows a bandwidth fluctuation pattern 500 illustrating an exemplary variation in the bandwidth usage in network 104 in the day, in accordance with an embodiment of the present invention. In bandwidth fluctuation pattern 500, the X-axis represents the time in the day and the Y-axis represents the bandwidth usage in network 104. At any time in the day, when the bandwidth usage falls below the threshold value, for example, 90 Megabytes per second (Mbps), incentives are offered for using services provided through network 104. For example, the incentives can be offered from 00:00 hours (hrs) to 03:00 hrs, since the bandwidth usage is less than 90 Mbps. The incentives can also be offered at 07:00 hrs and 11:00 hrs. Thereafter, the incentives can be offered after 20:00 hrs. In an embodiment of the present invention, the incentives can be offered for a fixed period of time, for example, for an hour, whenever the bandwidth usage falls below 90 Mbps.

In an embodiment of the present invention, the threshold value can be different for every hour. For example, based on past bandwidth fluctuation patterns it can be ascertained that the peak period of the bandwidth usage is from 13:00 hrs to 15:00 hrs. If on a particular day, the bandwidth usage during the peak period falls below the threshold value, the incentives need not be offered, since the bandwidth usage can be expected to rise anytime based on past patterns. In another embodiment of the present invention, the threshold value for the peak period can be higher than the threshold value for the rest of the day.

An advantage of the method and system as described earlier is that it increases the bandwidth usage in a network whenever the bandwidth usage is low even at a time other than a fixed time period. The method and system also offer flexibility to a user of an electronic device to choose a service of his choice, with reduced tariffs. Further, the method and system offer various types of incentives for using services including a reduction in the tariffs.

The system for increasing bandwidth usage in a network, as described in the present invention or any of its components, may be embodied in the form of a computer system. Typical examples of a computer system includes a general-purpose computer, a programmed microprocessor, a micro-controller, a peripheral integrated circuit element, and other devices or arrangements of devices that are capable of implementing the steps that constitute the method of the present invention.

The computer system comprises a computer, an input device, a display unit and the Internet. The computer further comprises a microprocessor. The microprocessor is connected to a communication bus. The computer also includes a memory. The memory may include Random Access Memory (RAM) and Read Only Memory (ROM). The computer system also comprises a storage device, which can be a hard disk drive or a removable storage drive, such as a floppy disk drive, optical disk drive, etc. The storage device can also be other similar means for loading computer programs or other instructions into the computer system. The computer system also includes a communication unit, which allows the computer to connect to other databases and the Internet through an Input/Output (I/O) interface. The communication unit allows the transfer as well as reception of data from other databases. The communication unit may include a modem, an Ethernet card, or any similar device that enables the computer system to connect to databases and networks such as LAN, MAN, WAN and the Internet. The computer system facilitates inputs from a user through input device, accessible to the system through I/O interface.

The computer system executes a set of instructions that are stored in one or more storage elements, in order to process input data. The storage elements may also hold data or other information as desired. The storage element may be in the form of an information source or a physical memory element present in the processing machine.

The set of instructions may include various commands that instruct the processing machine to perform specific tasks such as the steps that constitute the method of the present invention. The set of instructions may be in the form of a software program. Further, the software may be in the form of a collection of separate programs, a program module with a larger program or a portion of a program module, as in the present invention. The software may also include modular programming in the form of object-oriented programming. The processing of input data by the processing machine may be in response to user commands, results of previous processing or a request made by another processing machine.

## Claims

1. A method for increasing bandwidth usage in a network, the network comprising a plurality of electronic devices, the method comprising the steps of:
a. monitoring the bandwidth usage in the network; and
b. offering one or more incentives for using one or more services when the bandwidth usage is less than a threshold value, the one or more incentives being offered to a user of an electronic device from the plurality of electronic devices, the one or more services being provided at the electronic device through the network, wherein the one or more services increase the use of the bandwidth in the network.

2. The method according to claim 1 further comprising the steps of:
a. sending a message to the electronic device; and
b. determining whether the user of the electronic device intends to use the one or more services based on a response to the message, the response being sent by the user.

3. The method according to claim 1 or 2, wherein the step of offering the one or more incentives comprises the steps of:
a. sending a message to the electronic device, wherein the message includes at least one of names of the one or more services and the one or more incentives offered for using the one or more services; and
b. providing a service from the one or more services at the electronic device based on a response to the message, the response being sent by the user of the electronic device.

4. The method according to one of claims 1 to 3, wherein the step of offering the one or more incentives comprises providing the incentives based on preferences defined by the user.

5. The method according to one of claims 1 to 4 further comprising the step of providing a service from the one or more services based on preferences defined by the user.

6. The method according to one of claims 1 to 5, wherein the one or more services are selected form the group comprising online gaming, online gambling, the Internet, video streaming, audio streaming, content downloading, online shopping, voice calling, and online stock quotes.

7. The method according to one of claims 1 to 6, wherein the incentives are selected form the group comprising reduced tariff of the one or more services, free talktime for voice calling, a gift, credit points, and a gift coupon.

8. A bandwidth management system for increasing bandwidth usage in a network, the network comprising a plurality of electronic devices, the bandwidth management system comprising:
a. a monitoring module capable of monitoring the bandwidth usage in the network;
b. a comparator capable of comparing the bandwidth usage with a threshold value; and
c. a processing module capable of offering one or more incentives for using one or more services based on a comparison between the bandwidth usage and the threshold value, the one or more incentives being offered to a user of an electronic device from the plurality of electronic devices, the one or more services being provided at the electronic device through the network, wherein the one or more services use the bandwidth in the network.

9. The bandwidth management system according to claim 8 further comprising a communication module capable of sending a message to the electronic device, the communication module is further capable of receiving a response from the electronic device.

10. The bandwidth management system according to claim 8 or 9, wherein the processing module comprises an analyzer capable of determining whether the user of the electronic device intends to use the one or more services based on a response from the user.

11. The bandwidth management system according to one of claims 8 to 10 further comprising memory meanscapable of storing at least one of data associated with the one or more services, data associated with the one or more incentives and preferences of users of the plurality of electronic devices.

12. A computer program product for use with a computer, the computer program product comprising a computer usable medium having a computer readable program code embodied therein, for increasing bandwidth usage in a network, the network comprising a plurality of electronic devices, the computer program code performing:
a. monitoring the bandwidth usage in the network;
b. comparing the bandwidth usage with a threshold value; and
c. offering one or more incentives to a user of an electronic device for using one or more services based on a comparison between the bandwidth usage and the threshold value, the one or more services being provided at the electronic device through the network, wherein the one or more services use the bandwidth in the network.
